Europäisches Patentamt

(19) European Patent Office

Office européen des brevets

(11) Publication number: **0 010 979**
**B1**

(12) **EUROPEAN PATENT SPECIFICATION**

(45) Date of publication of patent specification: **01.02.84**

(21) Application number: **79302433.2**

(22) Date of filing: **02.11.79**

(51) Int. Cl.³: **H 02 H 7/122,**
**H 02 M 1/18, G 05 F 1/58**

(54) **AC electric motor driving circuit having overload protection circuitry.**

(30) Priority: **04.11.78 JP 136063/78**

(43) Date of publication of application:
**14.05.80 Bulletin 80/10**

(45) Publication of the grant of the patent:
**01.02.84 Bulletin 84/5**

(84) Designated Contracting States:
**DE FR GB**

(56) References cited:
**DE - A - 1 563 267**
**DE - A - 1 613 721**
**DE - A - 2 632 380**
**DE - B - 1 638 057**
**FR - A - 1 433 513**
**FR - A - 2 195 098**
**GB - A - 1 441 305**
**US - A - 2 680 221**
**US - A - 3 611 108**
**US - A - 3 760 258**

(73) Proprietor: **FANUC LTD**
**5-1, Asahigaoka 3-chome Hino-shi**
**Tokyo 191 (JP)**

(72) Inventor: **Kawada, Shigeki**
**346-15, Oaza-Shimoda**
**Hino-shi Tokyo (JP)**
Inventor: **Ishida, Hiroshi**
**2-73, Matsubara-cho, 2-chome**
**Hamura-machi Nishitama-gun Tokyo (JP)**

(74) Representative: **Bedggood, Guy Stuart et al,**
**Haseltine Lake & Co. Hazlitt House 28**
**Southampton Buildings Chancery Lane**
**London WC2A 1AT (GB)**

Courier Press, Leamington Spa, England.

AC Electric motor driving circuit having overload protection circuitry

This invention relates to an AC electric motor driving circuit having overload protection circuitry.

DC motors have long been adopted for use as spindle motors in machine tools or as crane motors, for example, but in recent years AC motors, particularly of the induction type, have increasingly been used in place of DC motors, owing to the fact that AC motors can now be controlled in speed over a wide range in the same manner as DC motors which they are gradually replacing.

A known AC motor speed control system will generally include an inverter circuit for converting direct current into an alternating current, direct current being supplied by a battery or obtained by rectifying a commercial three-phase AC power source, and an inverter drive or control circuit for varying the frequency of alternating current delivered by the inverter circuit. The alternating current delivered by the inverter circuit is then applied to the AC motor to be driven, which can be rotated at various desired speeds by varying the frequency of the alternating current.

In the inverter circuit the conversion of direct current to alternating current is accomplished by repeatedly switching thyristors on and off, if the inverter circuit is of the thyristor type. However, a disadvaantage of an inverter circuit that relies on thyristors is that it must be separately provided with a circuit to turn off the thyristors, since thyristors do not have the ability to perform this function themselves even if they can turn themselves on.

West German Offenlegungsschrift DE—A—1 563 262 discloses a process for controlling an asynchronous cage rotor machine fed via a pulse inverter, in which process a control circuit is employed to control flow of current to a rated value in the event of changes in load. Three chokes are disposed in respective output lines of a self-driven pulse inverter fed from a direct current supply. The reactive currents of the chokes are used as a measure of magnetisation current in the load machine. On the basis of this measure flow in the machine is controlled to take a desired value.

West German Auslegeschrift DE—B—1 638 057 discloses a process for controlling the speed of a three-phase machine driven by an inverter. The output currents of the inverter are measured by current measuring devices and converted into an actual current value for comparison with a desired current value for control of the speed of the rotor.

United States Patent US—A—3 760 258 discloses a static inverter system, for high power applications, with protection against short circuits in either the inverter or the load. Thyristors in a bridge network of the inverter have their firing signals terminated when current sensors located in input lines so the inverter and in an output load line indicate that a short circuit has developed.

In recent years, high output power transistors capable of controlling motors in the several tens of kilowatts class have been developed, and this has in turn led to the development of AC motor speed control systems which employ inverter circuits comprising such high output power transistors. Such inverter circuits are much simpler than those employing thyristors since each power transistor is controlled merely by the application of a base signal which can render the transistor conductive or non-conductive. However, transistors have poor resistance to overcurrents so that an inverter circuit using transistors has had to be provided with a protective circuit which protects the transistors from damage by immediately interrupting the direct current supply to the inverter circuit if an overcurrent flows into the transistors of the inverter circuit.

West German Offenlegungsschrift DE—A—2 632 380 discloses protection circuitry for an electric motor driving circuit using an inverter. A resistance is provided on the input side of the inverter circuit and develops a voltage proportional to the current passing into the inverter circuit. A comparator is provided for making a comparison between this voltage and the output voltage of an overcurrent value setting device. Upon detection that the input current to the inverter circuit has achieved a predetermined maximum permissible current set by the overcurrent value setting device, operation of the inverter is terminated. Further, a resistance is provided to develop a voltage proportional to the load current of the inverter circuit. A comparator is provided for making a comparison between this voltage and an output voltage produced by a current value setting device which represents a preselected current value. When the comparator responds upon detection of the preselected current value a current regulator tends to keep the current value substantially equal to that preselected current value.

A protective circuit having a single detector at the output of the inverter circuit, for detecting total output, does not provide for full effective protection of the transistors of a transistor-type inverter circuit.

In relation to inverters not using transistors, FR—A—2 195 098, GB—A—1 441 305, US—A—3 611 108, DE—A—1 613 721, FR—A—1 433 513 and US—A—2 680 221 disclose monitoring of each output phase of polyphase alternating current provided by an inverter circuit.

Interruption of direct supply to the inverter circuit, as mentioned above, can reduce working efficiency since an AC spindle motor, for example, whose speed is controlled by a transistor-type inverter circuit will be shut down every time an overload occurs in the machine tool employing such a system.

The thyristor-type system of United States Patent US—A—3,760,258 includes means for periodically restoring the thyristor firing circuitry to provide for automatic resumption of normal inverter operation in the event that a short circuit condition is only transient. If the short circuit condition still exists after a predetermined number of such restorations, the thyristor firing signals are permanently extinguished until the fault is corrected and the system is manually reset.

According to the present invention there is provided an AC electric motor driving circuit having overcurrent protection circuitry and arranged for driving an AC motor, which driving circuit includes an inverter circuit for converting direct current into polyphase AC output current by switching action of transistors, and an inverter driving circuit operable to regulate the output of the inverter circuit,

the overcurrent protection circuitry including,

phase current detection circuits operable respectively to detect different phase currents of the polyphase AC output current of the inverter circuit,

overcurrent value setting means for setting a pre-selected overcurrent value,

comparison circuits, each having a first input terminal connected to a respective phase current detection circuit, a second input terminal connected to the overcurrent value setting means, and an output terminal connected to the inverter drive circuit, operable to provide comparisons of the respective phase currents with the preselected current value, and

a generating circuit operable to generate rectangular wave signals of respective different phases,

the inverter drive circuit including a pulse generator, OR gates, flip-flops and gate circuits, and being arranged to receive the rectangular wave signals and to modulate those signals in dependence upon the results of said comparisons to provide transistor control output signals, for controlling the switching of the respective transistors of the inverter circuit, to regulate the different phase currents of the polyphase AC current of the inverter circuit in dependence upon the results of the comparisons, to protect the transistor of the inverter circuit from overcurrents, without stopping the motor;

respective set input terminals of the flip-flops being connected via respective OR gates to the pulse generator;

respective reset input terminals of the flip-flops being connected to respective output terminals of the comparison circuits,

respective first input terminals of the gate circuits being connected to respect set output terminals of the flip-flops,

respective second input terminals of the gate circuits being connected to receive respective rectangular wave signals derived from the generating circuit, and

respective output terminals of the gate circuits providing transistor control output signals for controlling switching of respective transistors of the inverter circuit,

the drive circuit being operable so that

when the reset input terminal of a flip-flop receives from the output terminal of a comparison circuit a result of comparison indicating that a phase current has exceeded the preselected overcurrent value, the flip-flop is reset, the gate circuit having a first input terminal connected to the set output terminal of the flip-flop is closed and a transistor control output signal such as to interrupt the phase current concerned is provided from the output terminal of the gate circuit,

and so that thereafter

a pulse is delivered from the pulse generator to the set input terminal of the flip-flop, the flip-flop is set and the gate circuit opened and a transistor control output signal such as to restore the phase current is provided from the output terminal of the gate circuit,

whereafter if the phase current again exceeds the pre-selected overcurrent value delivery of the phase current is again interrupted and subsequently restored, until the phase current no longer exceeds the preselected overcurrent value.

Embodiments of the present invention can be provided which are capable of effectively suppressing overcurrents in a transistor-type inverter circuit for driving an AC motor even when generation of overcurrent has already begun.

Further embodiments of the present invention can be provided which are capable of suppressing overcurrents in a transistor-type inverter circuit for driving an AC motor while permitting the AC motor to run continuously without being shut down, even when generation of the overcurrent has already begun.

Still further, embodiments of the present invention can be provided which are capable of suppressing an overcurrent in an inverter circuit for driving an AC motor while permitting the AC motor to run continuously without being shut down even if generation of the overcurrent has begun and regardless of its phase.

Moreover, embodiments of the present invention can be provided in which the protection operation level, that is the minimum current value which causes protection operation can be set at will.

Reference will now be made, by way of example, to the accompanying drawings, in which:

Fig. 1 is a schematic block diagram for use in illustrating a general configuration for an AC motor drive system in which an embodiment of the present invention can be employed;

Fig. 2 is a detailed circuit diagram illustrating overcurrent protection circuitry embodying the present invention in a drive system as illustrated in Figure 1;

Figure 3 is a schematic diagram showing respective waveforms occurring at circuit points in the arrangement illustrated in Fig. 2.

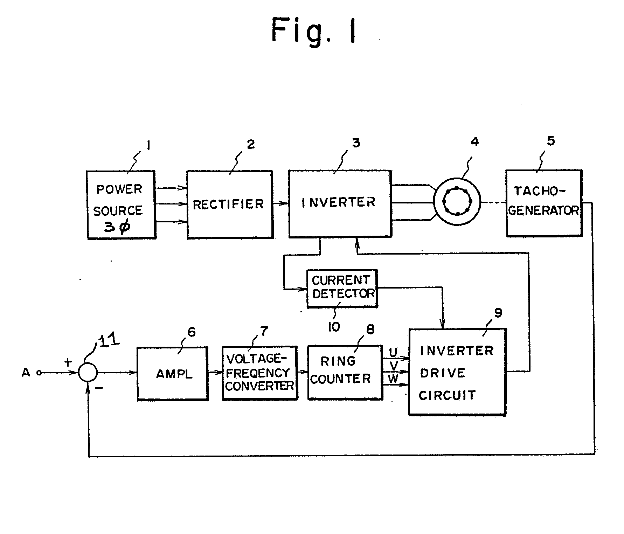

The block diagram of Fig. 1 illustrates a control system for driving an induction motor. The system comprises a three-phase commercial power source 1, a rectifier circuit 2, an inverter circuit 3 that employs power transistors, an induction motor 4, a tachometer generator 5, an amplifier 6, a voltage-frequency converter (referred to hereinafter as a V-F converter) 7, a three-phase ring counter 8, an inverter drive or control circuit 9, and an overcurrent detection circuit 10.

A speed instruction signal applied to an input terminal A of the system is fed to V-F converter 7 via a summing, or mixing circuit 11 and after being amplified in amplifier 6. The V-F converter produces a pulse signal output whose frequency is proportional to the voltage which appears on the output side of the amplifier 6. The three-phase ring counter 8 is operable to produce three rectangular voltage waves U, V and W successively displaced in phase by 120 degrees from one wave to the next in response to the pulse signal delivered by the V-F converter 7. The inverter drive circuit 9 is in turn responsive to the three rectangular voltage waves U, V and W from three-phase ring counter 8 to produce a drive signal for controlling groups of power transistors in the inverter circuit 3.

In the present example, the inverter circuit 3 provides a three-phase rectangular wave power source for motor 4. Thus, in this example, the inverter circuit 3 is controlled by the inverter drive signal from the drive circuit 9 to produce three-phase rectangular wave outputs by switching direct current delivered by the rectifier circuit 2, the three-phase outputs being supplied to the induction motor 4. Power supplied from this three-phase power source causes the induction motor 4 to rotate. The speed of motor 4 is detected by the tachometer generator 5 which is adapted to apply a feedback signal representative of motor speed to the input side of the system—that is to the summing circuit 11. Thereafter a closed loop operation of the control system functions to reduce to zero the output of the summing, or mixing, circuit, whereby the induction motor 4 is made to rotate at an instructed speed set by the instruction signal applied to terminal A.

If an excessive electric current flows into the inverter circuit 3, overcurrent detection circuit 10 detects this and informs inverter drive circuit 9 which responds by producing a drive signal which limits the flow of current through the inverter circuit 3.

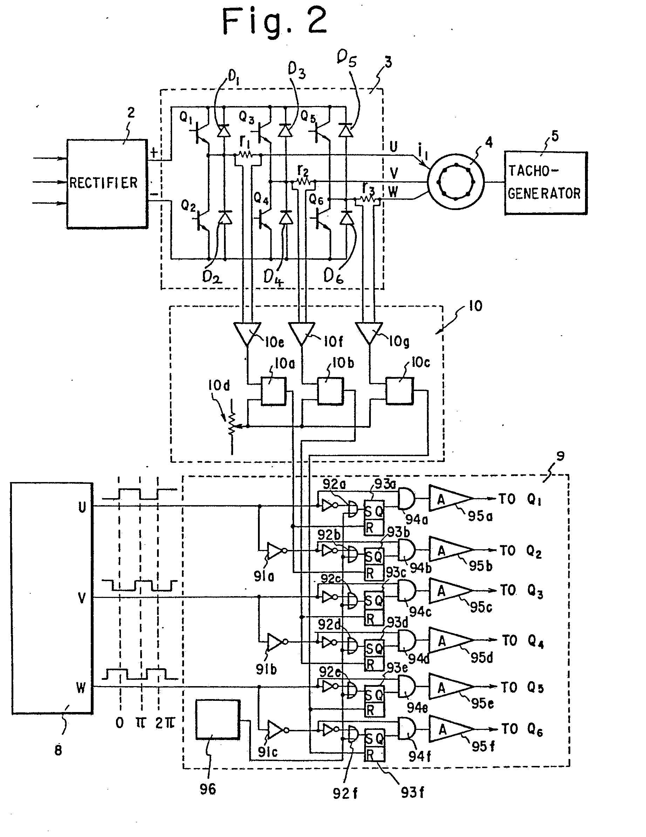

Figure 2 shows in detail circuitry embodying the present invention for overcurrent protection in an AC motor drive system having a general configuration as illustrated in Fig. 1. The inverter circuit 3 comprises power transistors $Q_1$ to $Q_6$ and free wheeling diodes $D_1$ to $D_6$. Transistors $Q_1$ and $Q_2$, transistors $Q_3$ and $Q_4$, and transistors $Q_5$ and $Q_6$, respectively produce the three rectangular wave outputs of the inverter circuit 3 at their respective different phases. The respective phase outputs are labelled V, U and W in Figure 2. Respective current detection resistors, $r_1$, $r_2$, $r_3$ are inserted in each phase output U, W, V of circuit 3 between the transistors of circuit 3 and induction motor 4. The overcurrent detection circuit 10 includes comparators 10a, 10b and 10c having respective first input terminals connected in common to an overcurrent value setting device 10d, schematically illustrated, by way of example, as a variable resistor (potential divider), and having respective second input terminals connected to opposite ends of respective resistors $r_1$, $r_2$, $r_3$ through respective isolation amplifiers 10e, 10f, 10g. Inverter drive circuit 9 comprises three inverters (logical inverters) 91a, 91b, 91c, six OR gates 92 to 92f, six flip-flops (referred to hereinafter as FF) 93a to 93f, six AND gates 94a to 94f, six drivers (amplifiers) 95a to 95f, and a pulse generator 96. The oscillation frequency of pulse generator 96 is set higher by an appropriate factor than the frequency of the rectangular waves delivered by the three-phase ring counter 8, more preferably specifically, the oscillation frequency of generator 96 is preferably set several tens of times higher than the maximum possible frequency of the rectangular waves delivered by counter 8.

The power transistors $Q_1$ to $Q_6$ of inverter circuit 3 are protected from overcurrents by means of the following operations which can occur in the circuitry of Fig. 2.

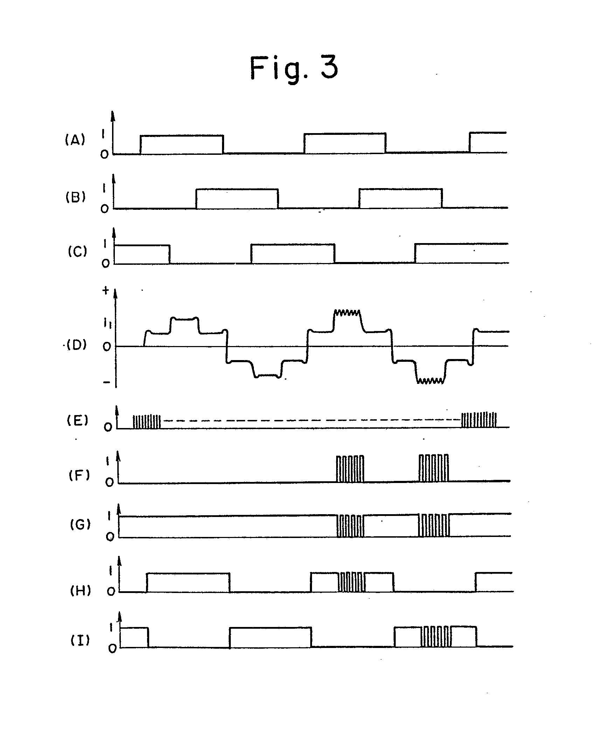

Rectangular waves as shown in waveforms A, B, and C in Figure 3 are delivered to inverter drive circuit 9 from the respective U, V and W phase outputs of three-phase ring counter 8. Limiting the discussion to the phase U for simplicity, FF 93a is set when the rectangular wave of phase U goes to logic "0" to send a corresponding logic "1" signal (provided by a logic inverter shown but not numbered) through the OR gate 92a. The output Q of FF 93a therefore goes to logic "1", applying a high level signal to one input terminal of AND gate 94a which is thus opened. When the rectangular wave of phase U undergoes a reversal and goes to logic "1", a corresponding "1" signal passes through the open AND gate 94a and is then applied as a transistor control output signal to driver 95a which amplifies the signal and feeds it to power transistor $Q_1$ to turn the transistor on. When the rectangular wave of phase U thereafter returns to logic "0", AND gate 94a produces an output (a transistor control output signal), at logic "0" which results in turn-off of power transistor $Q_1$.

Through inverter 91a connected to the U-phase rectangular wave output line of ring counter 8, an inverted U-phase wave is applied to OR gate 92b, FF 93b, AND gate 94b and driver 95b.

It will be understood from Figure 3 that driver 95b produces an output signal delayed in phase by 180 degrees with respect to the output of driver 95a which phase delayed output is used to control power transistor $Q_2$. Thus, when power transistor $Q_1$ is turned on, power transistor $Q_2$ is turned off. Conversely when power transistor $Q_1$ is turned off, power transistor $Q_2$ is turned on.

Similar operations to those described for the U-phase also take place in respect of the V and W phases as well, with power transistors $Q_3$ and $Q_4$ being turned on and off alternately in repetitive fashion, and also the power transistors $Q_5$ and $Q_6$. Switching the power transistors $Q_1$ to $Q_6$ on and off in combination produces three-phase voltage waves for driving the induction motor 4. When the induction motor is running normally, a current $i_1$, illustrated by the first half of waveforms D in Fig. 3, flows through the U-phase line chosen to serve as an example.

If an overcurrent should be generated and begin to flow in the U-phase line of the inverter circuit 3, there will be a large increase in the voltage developed across the resistor $r_1$, and the output of the comparator 10a will go to logic "1" if the voltage exceeds a value which has been set by the overcurrent value setting device 10d. The "1" output signal resets FF 93a and FF 93b, with the result that AND gates 94a and 94b are closed and power transistors $Q_1$ and $Q_2$ turned off simultaneously so that the flow of current through these transistors is interrupted. This operation protects the power transistors from the overcurrent and simultaneously returns the output of comparator 10a to logic "0".

The pulse generator 96 is constantly supplying pulses as shown in waveform E of Figure 3 to the OR gates 92a to 92f. Hence, immediately after FF 93a and FF 93b are reset they receive pulses from generator 96 through the OR gates 92a and 92b and are instantly set thereby. When this occurs the power transistors $Q_1$ and $Q_2$ are turned on or enabled as described above and hence begin to conduct in order to drive the motor. However, if the current $i_1$ flowing through resistor $r_1$ still attempts to attain an excessive value, the transistor protection operation as described above occurs again to disable power transistors $Q_1$ and $Q_2$ once more and hence protect them. The FF's 93a and 93b are reset and then immediately set again by the arrival of the pulses from pulse generator 96. This reset-set operation continues until induction motor 4 is no longer being subjected to an overload, the size of the current flowing through resistors $r_1$ thus decreasing to an acceptably small value. If this is the case, power transistors $Q_1$ and $Q_2$ are permitted to continue switching normally to produce the desired rectangular wave. Thus, when an overload occurs current delivery operation of phase U is interrupted. Then pulses from pulse generator 96 cause regular repeated restorations of current delivery of phase U. If, when such a restoration occurs, an overcurrent is again detected current delivery is interrupted again, with further restorations and interruptions until upon such a restoration, no overcurrent is detected, whereafter normal current delivery resumes.

Waveform F in Figure 3 illustrates the output waveform from comparator 10a when the comparator functions as described above for overload protection. Waveform G illustrates the Q output waveforms from FF 93a and 93b, and waveform H illustrates the output waveform from AND gate 94a. Waveform I illustrates the output waveform from AND gate 94b.

It should be noted that the utilization of the comparators in the overcurrent detection circuit 10 allows an overcurrent to be detected regardless of the direction in which current flows through a resistor, $r_1$ for example, Transistor protection operations are performed in a similar manner in relation to power transistors $Q_3$, $Q_4$ and $Q_5$, $Q_6$.

Thus, the embodiment of the present invention described above makes use of a gating circuit provided on the input side of an inverter drive circuit, and is arranged such that the gating circuit is closed when an overcurrent has begun to be generated within the inverter circuit, but is immediately reopened by a pulse from a pulse generator which supplies such pulses at a frequency higher than that of the input to the inverter drive circuit. Accordingly, even if an overcurrent begins to flow in the inverter circuit, in any one of the phases of the inverter circuit, it is possible to suppress the overcurrent, and hence protect the power transistors in the inverter circuit from breakdown that could otherwise be caused by the overcurrent, without terminating the operation of the inverter circuit altogether. Moreover, the fact that the overcurrent protection operation is effected by the gating circuit which is inserted on the input side of the inverter control circuit has a practical result wherein the capacity of the component parts which constitute the protective circuit can be made smaller in comparison with an overcurrent protective system that interrupts the main portion of the inverter circuit carrying a heavy current flow.

The application of embodiments of this invention is not limited to the drive system as described above. Embodiments can also be applied to a control device for a variable voltage—variable frequency drive system making use of a control device for varying the width of voltage pulses obtained by finely dividing the voltage applied to the motor to be driven, in proportion to an instructed motor speed. Embodiments of this invention can be applied in any well-kown speed control system that is suited to the type of AC motor employed or the use thereof.

The embodiment of the present invention described above provides overcurrent protection in a speed control system for an AC motor which includes an inverter circuit for converting a direct current into a polyphase rectangular wave alternating current by the switching action of transistors, and an inverter drive or control circuit adapted to apply control signals to the inverter circuit to bring the output alternating current frequency to a desired value for driving the induction motor to rotate. The system has current detection means for detecting current flowing through each phase on the output side of the inverter circuit, and decision means for repeatedly examining the output of the current detection means for fixed periods at a frequency higher than that at which the induction motor is driven. The decision means interrupts the operation of the inverter circuit when it has been judged that the current flowing through the output side of the inverter circuit is greater than a prescribed value, and actuates the inverter circuit when the current flowing through the output side thereof is less than the prescribed value. The result is that the inverter circuit is allowed to operate intermittently at a current which does not exceed a prescribed value, whereby the induction motor can run continuously without any observable halt in operation.

## Claim

An AC electric motor driving circuit having overcurrent protection circuitry and arranged for driving an AC motor, which driving circuit includes an inverter circuit (3) for converting direct current into polyphase AC output current by switching action of transistors ($Q_1$ to $Q_6$), and an inverter driving circuit (9) operable to regulate the output of the inverter circuit (3),

the overcurrent protection circuitry including

phase current detection circuits ($r_1$, 10e; $r_2$, 10f; $r_3$, 10g) operable respectively to detect different phase currents of the polyphase AC output current of the inverter circuit (3),

overcurrent value setting means (10d) for setting a pre-selected overcurrent value,

comparison circuits (10a; 10b; 10c), each having a first input terminal connected to a respective phase current detection circuit ($r_1$, 10e; $r_2$, 10f; $r_3$, 10g), a second input terminal connected to the overcurrent value setting means (10d), and an output terminal connected to the inverter drive circuit (9), operable to provide comparisons of the respective phase currents with the preselected current values, and

a generating circuit (8) operable to generate rectangular wave signals of respective different phases,

the inverter drive circuit (9) including a pulse-generator (96), OR gates (92a to 92f), flip-flops (93a to 93f) and gate circuits (94a to 94f), and being arranged to receive the rectangular wave signals and to modulate those signals in dependence upon the results of the said comparisons to provide transistor control output signals, for controlling switching of the respective transistors ($Q_1$ to $Q_6$) of the inverter circuit (3), to regulate the different phase currents of the polyphase AC current of the inverter circuit in dependence upon the results of the comparisons, to protect the transistors ($Q_1$ to $Q_6$) of the inverter circuit (3) from overcurrents, without stopping the motor;

respective set (S) input terminals of the flip-flops (93a to 93f) being connected via respective OR gates (92a to 92f) to the pulse generator (96),

respective reset (R) input terminals of the flip-flops (93a to 93f) being connected to respective output terminals of the comparison circuits (10a; 10b; 10c),

respective first input terminals of the gate circuits (94a to 94f) being connected to respective set (Q) output terminals of the flip-flops (93a to 93f),

respective second input terminals of the gate circuits (94a to 94f) being connected to receive respective rectangular wave signals derived from the generating circuit (8), and

respective output terminals of the gate circuits (94a to 94f) providing transistor control output signals for controlling switching of respective transistors ($Q_1$ to $Q_6$) of the inverter circuit (3),

the drive circuit being operable so that

when the reset (R) input terminal of a flip-flop (93a to 93f) receives from the output terminal of a comparison circuit (10a; 10b; 10c) a result of comparison indicating that a phase current has exceeded the pre-selected overcurrent value, the flip-flop (93a to 93f) is reset, the gate circuit (94a to 94f) having a first input terminal connected to the set (Q) output terminal of the flip-flop is closed and a transistor control output signal such as to interrupt the phase current concerned is provided from the output terminal of the gate circuit (94a to 94f),

and so that thereafter

a pulse is delivered from the pulse generator (96) to the set (S) input terminal of the flip-flop (93a to 93f), the flip-flop (93a to 93f) is set and the gate circuit (94a to 94f) opened and a transistor control output signal such as to restore the phase current is provided from the output terminal of the gate circuit (94a to 94f),

whereafter if the phase current again exceeds the pre-selected overcurrent value delivery of the phase current is again interrupted and subsequently restored, until the phase current no longer exceeds the pre-selected overcurrent value.

## Patentanspruch

Antriebsschaltung eines Wechselstrom-

Motors mit Überlastschutz mit einem Schaltungsaufbau derart, daß für die Antriebsschaltung ein Umsetzer (3) zum Umsetzen einer Gleichspannung in eine Mehrphasenwechselspannung durch Schalten von Transistoren ($Q_1$ ... $Q_6$) und eine Umsetzerantriebsschaltung (9), die so arbeitet, daß sie die Ausgangsspannung des Umsetzers (3) regeln kann, vorgesehen sind, daß für eine Überlastschutz-Schaltung Phasenstrom-Erfassungsschaltungen ($r_1$, 10e; $r_2$, 10f; $r_3$, 10g) vorgesehen sind, die jeweils dazu dienen, die verschiedenen Phasenströme der mehrphasigen Ausgangswechselspannung des Umsetzers (3) zu erfassen, daß ein Überstromwert-Einstellmittel (10d) zum Einstellen eines vorgewählten Überstromwertes vorgesehen ist, daß Vergleicherschaltungen (10a; 10b; 10c) vorgesehen sind, die jeweils eine erste Eingangsklemme, die jeweils mit einer Phasenstrom-Erfassungsschaltung ($r_1$, 10e; $r_2$, 10f; $r_3$, 10g) verbunden ist, eine zweite Eingangsklemme, die mit dem Überstromwert-Einstellmittel (10d) verbunden ist, und eine Ausgangsklemme, die mit der Umsetzerantriebsschaltung (9) verbunden ist, aufweisen und die dazu dienen, Vergleiche betreffend die jeweiligen Phasenströme mit den vorgewählten Überstromwerten vorzunehmen, daß eine Generatorschaltung (8) vorgesehen ist, die dazu dient, Rechteckwellensignale für unterschiedlichen Phasen zu erzeugen, daß die Umsetzerantriebsschaltung (9) einen Impulsgenerator (96), ODER-Glieder (92a ... 92f), Flipflops (93a ... 93f) und UND-Glieder (94a ... 94f) enthält und derart angeordnet ist, daß sie die Rechteckwellensignale empfängt, um diese in Abhängigkeit von den Ergebnissen der Vergleiche zu modulieren, um auf diese Weise Transistorsteuer-Ausgangssignale zum Steuern der jeweiligen Schaltvorgänge der Transistoren ($Q_1$ ... $Q_6$) des Umsetzers (3) zu erzeugen, um auf diese Weise die unterschiedlichen Phasenströme der mehrphasigen Wechselspannung des Umsetzers (3) in Abhängigkeit von den Ergebnissen der Vergleiche zu regeln, um so die Transistoren ($Q_1$ ... $Q_6$) des Umsetzers (3) gegen Überströme zu schützen, ohne dabei den Motor anzuhalten, daß die Setzeingänge (S) der Flipflops (93a ... 93f) über die betreffenden ODER-Glieder (92a ... 92f) mit dem Impulsgenerator (96) verbunden sind, daß die Rücksetzeingänge (R) der Flip-flops (93a ... 93f) mit den betreffenden Ausgangsklemmen der VErgleicherschaltungen (10a; 10b; 10c) verbunden sind, daß jeweils erste Eingangsklemmen der UND-Glieder (94a ... 94f) mit den betreffenden Ausgängen (Q) der Flipflops (93a ... 93f) verbunden sind, daß jeweils zweite Eingangsklemmen der UND-Glieder (94a ... 94f) derart beschaltet sind, daß sie die jeweils betreffenden Rechteckwellensignale, die von der Generatorschaltung (8) geliefert werden aufnehmen, daß jeweils die Ausgangsklemmen der UND-Glieder (94a ... 94f) die Transistorsteuer-Ausgangssignale zum Steuern der Schaltvor-

gänge der betreffenden Transistoren ($Q_1$ ... $Q_6$) des Umsetzers (3) liefern, wobei die Antriebsschaltung derart arbeitet, daß dann, wenn der Rücksetzeingang (R) eines der Flipflops (93a ... 93f) von der Ausgangsklemme einer der Vergleicherschaltungen (10a; 10b; 10c) ein Vergleichsergebnissignal empfängt, welches anzeigt, daß ein Phasenstrom den vorgewählten Überstromwert überschritten hat, das betreffende Flipflop (93a ... 93f) rückgesetzt wird, womit das betreffende UND-Glied (94a ... 94f), dessen ersten Eingangsklemme mit der Ausgangsklemme (Q) des Flipflop verbunden ist, gesperrt wird, und ein Transistorsteuer-Ausgangssignal derart, daß der Phasenstrom, den dies betrifft, unterbrochen wird, von der Ausgangsklemme des betreffenden UND-Gliedes (94a ... 94f) geliefert wird, daß danach ein Impuls von dem Impulsgenerator (96) an den Setzeingang (S) des betreffenden Flipflop (93a ... 93f) geliefert welches Flipflop (93a ... 93f) gesetzt wird, das betreffende UND-Glied (94a ... 94f) entsperrt wird und ein Transistorsteuer-Ausgangssignal derart von der Ausgangsklemme des betreffenden UND-Gliedes (94a ... 94f) geliefert wird, daß der Phasenstrom wiederhergestellt wird, wonach dann, falls der Phasenstrom erneut den vorgewählten Überstromwert übersteigt, die Lieferung des Phasenstroms erneut unterbrochen und in der Folge wiederhergestellt wird, bis der Phasenstrom nicht weiter den vorgewählten Überestromwert übersteigt.

**Revendication**

Circuit d'entraînement d'un moteur électrique à courant alternatif, comprenant un circuit de protection contre les surintensités, et destiné à entraîner un moteur à courant alternatif, le circuit d'entraînement comprenant un circuit convertisseur (3) destiné à convertir un courant continu en un courant de sortie alternatif polyphasé, par la commutation de transistors ($Q_1$ à $Q_6$) et un circuit de commande (9) du convertisseur prévu pour régler la sortie du circuit du convertisseur (3), le circuit de protection contre les surintensités comprenant, des circuits de détection des courants de phase ($r_1$, 10e; $r_2$, 10f; $r_3$, 10g) respectivement agencés pour détecter les différents courants de phase du courant de sortie alternatif polyphasé du circuit deu convertisseur (3), des moyens de réglage (10d) de la valeur de surintensité destinée à fixer une valeur de surintensité présélectionnée, des circuits comparateurs (10a, 10b, 10c) présentant chacun une première borne d'entrée raccordée à un circuit respectif de détection du courant de phase ($r_1$, 10e; $r_2$, 10f; $r_3$, 10g) une seconde borne d'entrée raccordée aux moyens de réglage (10d) de la valeur de surintensité, et une borne de sortie raccordée au circuit de commande (9) du convertisseur, agencés pour fournir des comparaisons entre les courants de phase respectives et les valeurs de courant présélectionnées, et un circuit générateur (8) agencé pour engendrer des signaux rectangulaires de phases respectives différentes,

le circuit de commande (9) du convertisseur comprenant un générateur d'impulsions (96), des portes OU (92a à 92f), des bascules (93a à 93f) et des circuits de portes (94a à 94f), et étant agencé pour recevoir les signaux d'ondes rectangulaires et moduler ces signaux selon les résultats desdites comparaisons, pour fournir des signaux de sortie de commande des transistors, afin de commander le commutation des transistors respectifs ($Q_1$ à $Q_6$) du circuit convertisseur (3), pour effectuer la régulation des différents courants de phase ducourant alternatif polyphasé du circuit convertisseur selon les résultats des comparaisons, afin de protéger les transistors ($Q_1$ à $Q_6$) du circuit convertisseur (3) contre les surintensités, sans arrêter le moteur; les bornes d'entrée d'armement respectives (5) des bascules (93a à 93f) étant raccordées au générateur d'impulsions (96) par des portes OU respectives (92a à 92f); les bornes d'entrée de réarement respectives (R) des bascules l(93a à 93f) étant raccordées aux bornes de sortie respectives des circuits comparateurs (10a, 10b, 10c); les premières bornes d'entrée respectives des circuits de portes (94à 94f) étant raccordées aux bornes de sortie d'armement respectives (Q) des bascules (93a à 93f); les secondes bornes d'entrée respectives des circuits de porte (94a à 94f) étant raccordées de façon à recevoir les signaux d'ondes rectangulaires respectifs obtenus à partir du circuit générateur (8), et

les bornes de sortie respectives des circuits de porte (94a à 94f) fournissant des signaux de sortie de commande des transistors destinés à commander la commutation des transistors respectifs ($Q_1$ à $Q_6$) du circuit convertisseur (3), le circuit d'entraînement étant agencé de façon que lorsque la borne d'entrée de réarmement (R) d'une bascule (93a à 93f) reçoit à partir de la borne de sortie d'un circuit comparateur (10a, 10b, 10c) un résultat de comparaison indiquant qu'un courant de phase a dépassé la valeur de surintensité présélectionnée, la bascule (93a à 93f) est réarmée, le circuit de portes (94a à 94f) ayant une première borne d'entrée raccordée à la borne de sortie d'armement (Q) de la bascule est fermé et un signal de sortie de commande des transistors, destiné à interrompre le courant de phase concerné est fourni à partir de la borne de sortie du circuit de portes (94a à 94f),

et de façon à ce que, par la suite,

une impulsion soit délivrée par la générateur d'impulsions (96) vers la borne d'entrée d'armement (5) de la bascule (93a à 93f), la bascule (93a à 93f) armée et le circuit de portes (94a à 94f) ouvert et qu'un signal de sortie de commande d'un transistor, destiné à rétablir le courant de phase, soit fourni à partir de la borne de sortie du circuit de portes (94a à 94f),

après quoi, si le courant de phase dépasse à nouveau la valeur de surintensité présélectionnée, l'alimentation en courant de phase est à nouveau interrompue puis rétablie jusqu'à ce que le courant de phase ne dépasse plus la valeur de surintensité présélectionnée.

# Fig. I

# Fig. 2

# Fig. 3